# EUROPÄISCHE PATENTSCHRIFT

(11) **EP 2 548 786 B1**
(45) Veröffentlichungstag und Bekanntmachung des Hinweises auf die Patenterteilung: **01.01.2020**
(21) Anmeldenummer: 12005305.3
(22) Anmeldetag: 20.07.2012
(51) Int. Cl.: B62D 21/15, B62D 49/04, E01H 5/06

(54) **Anbindung eines Anbauelements an einem Nutzfahrzeugrahmen**
Connection for an attachment in a commercial vehicle frame
Connexion d'un élément de montage sur un châssis de véhicule utilitaire

(30) Priorität: 22.07.2011 DE 102011108322
(43) Veröffentlichungstag der Anmeldung: 23.01.2013
(73) Patentinhaber: Aebi Schmidt Deutschland GmbH, 79837 St. Blasien (DE)
(72) Erfinder: Zechlin, Jörg, Dipl.-Ing., 12621 Berlin (DE); Wallraff, Karl, Dipl.-Ing., 72213 Altenstaig (DE); Voehringer, Detlef, Dipl.-Math., 71409 Schwaikheim (DE); Harenbrock, Ralf, Dipl.-Ing. (FH), 73734 Esslingen (DE); Müller, Dieter, 79877 Friedenweiler (DE)
(74) Vertreter: Grättinger Möhring von Poschinger Patentanwälte Partnerschaft mbB

(56) Entgegenhaltungen:
- DE-A1-102008 003 488
- US-A- 3 588 147
- US-B1- 7 334 357

## Beschreibung

Die Erfindung betrifft die Anbindung eines Anbauelements an einem Nutzfahrzeugrahmen, das in Fahrtrichtung vor einem Frontend des Nutzfahrzeugrahmens angeordnet ist, mit einem Tragelement, über das das Anbauelement an Rahmenlängsträgern des Nutzfahrzeugrahmens angebunden ist.

Bei Nutzfahrzeugen sind Anbauelemente, die im vorderen Bereich der Rahmenlängsträger befestigt sind und das Frontend eines Nutzfahrzeugs nach vorne überragen, hinlänglich bekannt. Ein Beispiel für derartige Anbauelemente sind sogenannte Anbauplatten, die vor der Fahrzeugfront angeordnet sind und der Aufnahme unterschiedlicher Arbeitsgeräte dienen. Die Anbindung der Arbeitsgeräte an das Bordnetz, die Bordelektronik und/oder an spezielle Betriebsstoffversorgungseinheiten, insbesondere an eine Hydraulikölversorgung, erfolgt über entsprechend geeignete Steckverbindungen im Bereich der Anbauplatte. Vielfach werden derartige Anbauplatten zur Befestigung der für den Winterdienst benötigten Schneepflüge verwendet, wie in Dokument US 7 334 357 B1 offenbart.

Bislang werden derartige Anbauplatten vornehmlich für schwere Lastkraftwagen, also Lastkraftwagen mit einem zulässigen Gesamtgewicht von mehr als 7,5 t eingesetzt. Die Befestigung der Anbauplatte sowie der die Anbauplatte tragenden Halter erfolgt hierbei mit Hilfe von starren Elementen im Frontendbereich des Fahrzeugrahmens.

In diesem Zusammenhang ist aus der DE 10 2008 039 949 A1 ein Querträger für ein Nutzfahrzeug bekannt, der die beiden Rahmenlängsträger eines Nutzfahrzeugs in einem vorderen Bereich des Fahrzeugs verbindet. Der Querträger verfügt über einstückig mit diesem ausgeführte Befestigungselemente, die einen Anbau von Anbauelementen, wie etwa Abschleppösen, Kupplungsmäulern, Schäkeln oder auch Anbauplatten für die Anbringung eines Schneepfluges, ermöglichen. Die Verbindung zwischen Anbauelement und Querträger und somit gleichzeitig zwischen Anbauelement und Rahmenlängsträger ist aufgrund der verwendeten Schraubverbindungen als starre Verbindung ausgeführt. Wird als Anbauelement eine Anbauplatte an dem Querträger befestigt, so befindet sich diese immer am Fahrzeug, obwohl ein Schneepflug nur im Winter benötigt wird und auch nur zu dieser Zeit an der Anbauplatte des Fahrzeugs befestigt ist.

Problematisch an einer starren Verbindung zwischen Anbauelement bzw. Anbauplatte und Rahmenlängsträger ist, dass im Falle eines Frontalaufpralls im Bereich der Anbauplatte aufgrund der starren Anbindung am Rahmen und der damit verbundenen Steifigkeit vergleichsweise starke Intrusionen im Innenraum des Fahrzeugs auftreten können. Dieses Problem tritt vor allem dann besonders hervor, wenn eine derartige Anbauplatte nicht an einem schweren Nutzfahrzeug, sondern vielmehr an einem leichten Nutzfahrzeug, etwa an einem Kleintransporter, Kraftfahrzeug mit Pritsche, Geländewagen, Van oder ähnlichem befestigt werden soll. In diesem Fall können erhebliche Schädigungen des Fahrgastraumes auftreten, da die steife Anbindung der Anbauplatte an die Rahmenlängsträger keine wirkungsvolle Kraftaufnahme und damit verbundene Deformation im Frontendbereich des Rahmens gewährleistet.

Ausgehend von den bekannten technischen Lösungen zur Anbindung von Anbauelementen im Frontendbereich eines Nutzfahrzeugs und dem geschilderten Problem liegt der Erfindung die Aufgabe zugrunde, ein Anbindungskonzept bereitzustellen, das einerseits eine zuverlässige Befestigung eines Anbauelements im Frontendbereich eines Nutzfahrzeugs ermöglicht und andererseits derart flexibel ist, dass insbesondere bei Einsatz eines derartigen Systems in leichten Nutzfahrzeugen die im Crashfall im Frontendbereich auftretenden Kräfte aufgenommen und hier abgebaut werden können. Die Anbindung eines Anbauelements, das sich vor der Fahrzeugfront befindet, sollte vor allem derart ausgeführt sein, dass starke Intrusionen im Bereich des Fahrzeuginnenraums zumindest auf ein tolerierbares Maß beschränkt werden. Die anzugebende technische Lösung soll hierbei mit verhältnismäßig einfachen konstruktiven Mitteln zu realisieren sein und weitgehend keinen negativen Einfluss auf die Funktionalität der im Fahrzeugfrontbereich vorgesehenen Anbauelemente sowie der daran zu befestigenden Arbeitsgeräte haben.

Die zuvor beschriebene Aufgabe wird mit einer Anbindung für ein Anbauelement gemäß Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Erfindungsgemäß ist eine Anbindung eines Anbauelements an einem Nutzfahrzeugrahmen, das in Fahrtrichtung vor einem Frontend des Nutzfahrzeugrahmens angeordnet ist, mit einem Tragelement, über das das Anbauelement an Rahmenlängsträgern des Nutzfahrzeugrahmens angebunden ist, derart weitergebildet worden, dass jeder Rahmenlängsträger im vorderen Bereich als Tragelement eine erste und eine zweite Konsole aufweist, die derart an den Rahmenlängsträgern befestigt sind, dass bei einem Frontalaufprall im Bereich des Anbauelements die erste Konsole relativ zur zweiten Konsole bewegbar ist.

Mit der erfindungsgemäßen technischen Lösung wird sichergestellt, dass im Crashfall, insbesondere bei einem Frontalaufprall im Bereich des Anbauelements, im vorderen Bereich der Rahmenlängsträger ein Deformationsbereich vorgesehen ist, über den die während des Unfalls eingeleiteten Kräfte umgesetzt werden können. Durch eine im Frontbereich der Rahmenlängsträger stattfindende Relativbewegung bzw. Deformation, werden die unfallbedingt in die Rahmenlängsträger eingeleiteten Kräfte abgebaut und so Intrusionen in anderen Fahrzeugbereichen, insbesondere im Bereich des Fahrzeuginnenraums, weitgehend vermieden oder zumindest auf ein unbedenkliches Maß beschränkt. Die erfindungsgemäße Anbindung eines Anbauelements führt somit zu einer Erhöhung der Fahrzeugsicherheit, insbesondere für den Fahrer sowie einen Beifahrer. Die beschriebene Lösung eignet sich besonders für den Einsatz bei leichten Nutzfahrzeugen, wie beispielsweise Kleintransportern mit Pritsche oder geschlossenem Kastenaufbau.

Wesentlich für die erfindungsgemäße Lösung ist, dass das Tragelement, an dem das Anbauelement mittelbar oder unmittelbar befestigt ist, zweiteilig ausgeführt ist. Erfindungsgemäß verfügt das Tragelement über zwei separate, räumlich beabstandete Konsolen, die beim Auftreten unfallbedingter Krafteinwirkungen im Bereich der Rahmenlängsträger relativ zu einander bzw. gegeneinander bewegbar sind. Erfindungsgemäß ist eine der beiden Konsolen derart an den Rahmenlängsträgern fixiert, dass diese im Crashfall ihre Position weitgehend beibehält, während sich die andere Konsole relativ zu der weitgehend ortsfesten Konsole bewegt.

In einer speziellen Ausführungsform der Erfindung ist zwischen der ersten Konsole und wenigstens einem Rahmenlängsträger, an dem diese Konsole befestigt ist, zumindest bereichsweise ein Luftspalt als Freigang vorgesehen. Ein derartiger Freigang stellt sicher, dass im Crashfall eine Relativbewegung zwischen der ersten Konsole und dem Rahmenlängsträger stattfinden kann. Ebenso ist eine Deformation des Rahmenlängsträgers in diesem Bereich möglich, so dass die eingeleiteten Kräfte auf bevorzugte Weise abgeleitet werden können.

Erfindungsgemäß ist die erste Konsole des Tragelements in Fahrtrichtung des Nutzfahrzeugs vor der zweiten Konsole angeordnet. Weiterhin ist die erste Konsole mit einem Befestigungsmittel am Rahmenlängsträger befestigt, dessen Verbindung mit dem Rahmenlängsträger bei einem Frontalaufprall im Bereich des Anbauelementes gelöst wird. Eine geeignete Weiterbildung sieht in diesem Zusammenhang vor, dass die erste Konsole mit dem Rahmenlängsträger verschraubt ist und im Crashfall bei Auftreten entsprechender Kräfte die Schraubverbindung abgeschert wird und sich die erste Konsole relativ zum Rahmenlängsträger und gleichzeitig zur zweiten Konsole bewegen kann. Die aufgrund des Abscherens des Befestigungselementes sowie der stattfindenden Bewegung und / oder Deformation der ersten Konsole und / oder des Rahmenlängsträgers abgeleiteten Kräfte werden auf diese Weise nicht mehr in den Bereich des Fahrzeuginnenraums weitergeleitet.

In einer weiteren Ausführungsform der Erfindung ist es denkbar, dass die erste Konsole den Rahmenlängsträger, an dem sie befestigt ist, zumindest an zwei Seiten wenigstens abschnittsweise überdeckt. Vorzugsweise ist die erste Konsole hierbei rahmenartig ausgeführt, wobei sich der Rahmenlängsträger, an dem die erste Konsole befestigt ist, innerhalb des Konsolenrahmens befindet. Eine Relativbewegung zwischen der ersten Konsole und dem Rahmenlängsträger ist somit bei Auftreten entsprechender Kräfte problemlos möglich. Gleichzeitig stellt der rahmenartige Aufbau der ersten Konsole eine gewisse Führung des Rahmenlängsträgers sicher sobald eine Relativbewegung zwischen diesen Bauelementen stattfindet.

Gemäß einer weiteren bevorzugten Ausführungsform der Erfindung ist die zweite Konsole an wenigstens einer Stelle fest mit dem Rahmenlängsträger verbunden und verspannt. Wesentlich hierbei ist, dass die zweite Konsole im Vergleich zur ersten Konsole fest mit dem Rahmenlängsträger verbunden ist und so quasi den Fixpunkt des zweiteilig ausgeführten Tragelementes darstellt. Im Crashfall findet somit eine Bewegung der ersten Konsole und / oder eine Deformation des Rahmenlängsträgers relativ zur zweiten Konsole, insbesondere zu deren fixem Anbindungspunkt am Rahmenlängsträger statt. Die zweite Konsole ist somit zumindest weitgehend ortsfest.

Mit der beschriebenen erfindungsgemäßen Anbindung eines Anbauelements an einem Fahrzeugrahmen wird zwischen den beiden Konsolen des Tragelements ein Deformationsbereich geschaffen, der eine Bewegung bzw. Deformation im Crashfall ermöglicht. Bei einem Frontalaufprall im Bereich des Anbauelements, das sich vor der Fahrzeugfront befindet, wird die Anbauplatte gemeinsam mit ihrem wenigstens einen Halter sowie der ersten Konsole entgegen der Fahrtrichtung nach hinten verschoben. Diese Bewegung findet relativ zu den Rahmenlängsträgern und der zweiten Konsole des Tragelementes statt.

Bevorzugt ist der vorstehend erwähnte Halter an der zugeordneten zweiten Konsole in einer zur Erstreckung des zugeordneten Längsträgers parallelen Richtung verschiebbar geführt. Auf diese Weise wird einem Ausbrechen des Halters im Crashfall nach oben oder unten entgegengewirkt. Geeignete Führungsmittel können beispielsweise Bolzen-Langloch-Paarungen sein. In Betracht kommen indessen auch bekannte andere im Sinne einer Linearführung zusammenwirkende Führungselemente. Ist in solcher Weise ein Halter für das Anbauelement über geeignete Führungsmittel an der zweiten Konsole verschiebbar geführt, sind ggfs. an eine Führung der ersten Konsole auf bzw. an dem zugeordneten Längsträger geringere Anforderungen zu stellen, was hinwiederum von Nutzen sein kann, wenn der Längsträger selbst für eine gezielte Deformation im Falle eines Crashes ausgeführt ist.

In einer weiteren speziellen Ausführungsform der Erfindung ist vorgesehen, dass die erste und / oder die zweite Konsole derart geformt sind, dass bei einem Frontalaufprall im Bereich des Anbauelementes ein vor der zweiten Konsole befindlicher Abschnitt wenigstens eines der Rahmenlängsträger zumindest teilweise verformbar ist. Alternativ oder in Ergänzung zur Verformung des Rahmenlängsträgers selbst bietet sich vornehmlich die Verformung des Tragelementes, insbesondere der ersten und / oder der zweiten Konsole, zum Abbau der im vorderen Bereich des Nutzfahrzeugs in den Rahmen eingeleiteten Kräfte an. In jedem Fall ist die Anbindung des Anbauelementes an den Nutzfahrzeugrahmen derart ausgeführt, dass Intrusionen im Bereich des Fahrzeuginnenraums weitgehend vermieden oder zumindest auf ein tolerierbares Maß beschränkt werden.

Gemäß der Erfindung ist das Anbauelement und / oder ein Halter zur Befestigung des Anbauelements am Fahrzeugrahmen über ein Befestigungsmittel derart mit der zweiten Konsole verbunden, das im Crashfall eine Relativbewegung zwischen der zweiten Konsole und dem Anbauelement und / oder seinem Halter ermöglicht wird. Hierbei ist innerhalb eines Halters des Anbauelements wenigstens eine Befestigungsstruktur vorgesehen, die derart ausgeführt ist und von einer Schraube durchdrungen wird, dass bei einem Frontalaufprall im Bereich des Anbauelements eine Relativbewegung zwischen der wenigstens einen Schraube und dem Halter mit der Befestigungsstruktur stattfindet. Vorzugsweise ist die Befestigungsstruktur hierbei in Form eines Langlochs innerhalb des Halters ausgeführt, in dem sich der Schraubenschaft der Befestigungsschraube befindet. Die Schrauben-Langloch-Paarungen dienen dabei nicht nur als Führungsmittel in dem weiter oben dargelegten Sinne. Vielmehr lassen sich über die Schrauben die beiden miteinander verschiebbar verbundenen Teile mit einer definierten Anpresskraft gegeneinander verspannen, wodurch sich gezielt auf die für das Verschieben erforderliche Kraft Einfluss nehmen lässt. Dieses gestattet wiederum die gezielte Beeinflussung des Losbrech- und/oder Dämpfverhaltens bei einem Aufprall und/oder eines Energieverzehrs durch Reibarbeit. Die Schrauben sind bevorzugt demnach so dimensioniert, dass sie die berechnete Vorspannkraft, mit welcher die beiden Teile gegeneinander verspannt werden, bereitstellen.

Auch wenn die erfindungsgemäße technische Lösung hierauf nicht beschränkt ist, eignet sie sich doch besonders für den Anbau einer Anbauplatte an einem Nutzfahrzeugrahmen, die der zumindest zeitweisen Befestigung von Arbeitsgeräten dient. Hierbei zeichnet sich die erfindungsgemäße Lösung auch dadurch aus, dass sie erst den Einsatz entsprechender Anbauplatten bei leichten Nutzfahrzeugen ermöglicht.

Im Folgenden wird die Erfindung ohne Beschränkung des allgemeinen Erfindungsgedankens anhand von Ausführungsbeispielen unter Bezugnahme auf die Figuren näher erläutert. Dabei zeigen:
- Fig. 1: Anbindung einer Anbauplatte an einem Nutzfahrzeugrahmen in einer Seitenansicht;
- Fig. 2: Anbindung einer Anbauplatte an einem Nutzfahrzeugrahmen im Crashfall;
- Fig. 3: erste Konsole des Tragelementes; sowie
- Fig. 4: zweite Konsole des Tragelementes.

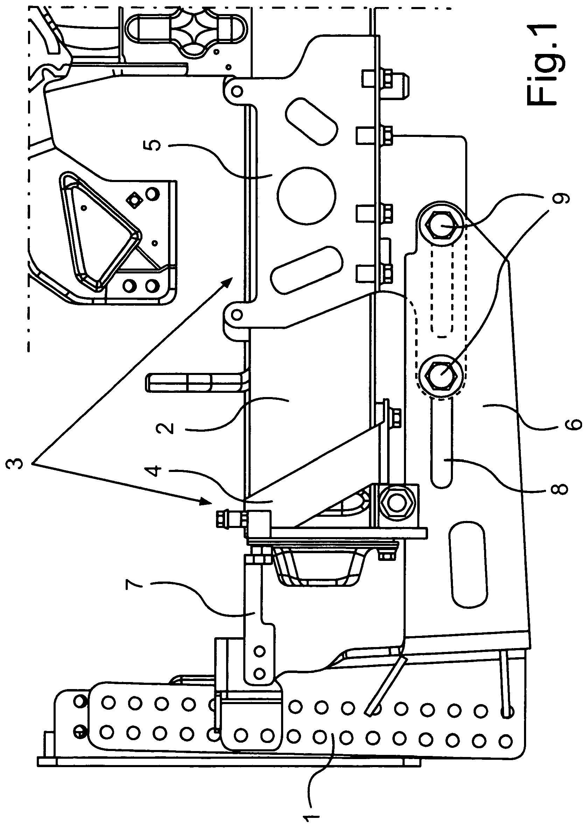

Fig. 1 zeigt die Anbindung einer Anbauplatte 1 an einem Fahrzeugrahmen eines Nutzfahrzeugs mit geschlossenem Kastenaufbau in einer Seitenansicht. Die Anbauplatte 1 ist über einen unteren Halter 6 und geeignete Schraubverbindungen sowohl an einer ersten Konsole 4 als auch an einer zweiten Konsole 5 eines Tragelementes 3 befestigt. Die Anbindung des unteren Halters 6 an die erste sowie die zweite Konsole 4, 5 erfolgt in einem Bereich unterhalb des Rahmenlängsträgers 2. Zur Anbindung der Anbauplatte 1 ist ferner ein oberer Halter 7 vorgesehen, der mit der ersten Konsole 4 des Tragelementes 3 verschraubt ist.

Die Befestigung des unteren Halters 6 der Anbauplatte 1 an der zweiten Konsole 5 erfolgt mit Hilfe von Befestigungsschrauben 9, die an der zweiten Konsole 5 fixiert sind, während sie im Bereich des unteren Halters 6 dort vorgesehene Langlöcher 8 durchdringen. Im Crashfall und der damit verbundenen Bewegung der Anbauplatte 1 bzw. der Halter 6, 7 der Anbauplatte 1 erfolgt eine gezielte Verschiebung der unteren Halter 6 mit deren Langlöchern 8 entlang der Befestigungsschrauben 9. Des Weiteren ist die zweite Konsole 5 mit Hilfe weiterer Befestigungsschrauben fest mit dem Rahmenlängsträger 2 verbunden.

Der untere Halter 6 der Anbauplatte 1 ist unterhalb der ersten Konsole 4 mit dieser verschraubt. Die erste Konsole 4 selbst ist ebenfalls mit Hilfe einer Befestigungsschraube 10 am Untergurt des Rahmenlängsträgers 2 befestigt.

Die in Fig. 1 dargestellte Anbauplatte 1 dient der Befestigung eines Arbeitsgerätes, insbesondere eines Schneepfluges an einem leichten Nutzfahrzeug. Der Schneepflug wird hierbei für den Winterdienst am Fahrzeug befestigt, während das Fahrzeug in den Sommermonaten zumindest überwiegend nur mit der Anbauplatte 1 betrieben wird.

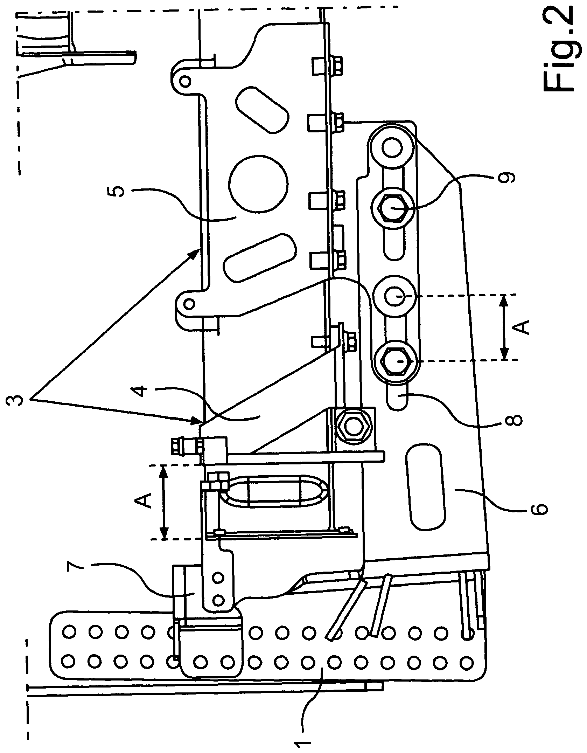

Fig. 2 zeigt die im Zusammenhang mit Figur 1 bereits erläuterte Anbindung einer Anbauplatte 1 an den Rahmenlängsträger 2 eines leichten Nutzfahrzeugs. Wesentlich hierbei ist, dass das Tragelement 3 zur Anbindung der Anbauplatte 1 über die Halter 6, 7 der zwei Konsolen 4, 5 aufweist, die eine Deformation im Frontendbereich der Rahmenlängsträger 2 ermöglichen.

Im Gegensatz zu Fig. 1 zeigt Fig. 2 die Anbindung der Anbauplatte 1 an einen Rahmenlängsträger 2 nach einem Fahrzeugcrash, insbesondere nach einem Frontalaufprall im Bereich der Anbauplatte 1. Deutlich zu erkennen ist in diesem Fall die Verschiebung der Anbauplatte 1 sowie der Halter 6, 7 relativ zur zweiten Konsole 5 entgegen der Fahrtrichtung nach hinten. Die Anbauplatte 1 ist somit unfallbedingt gemeinsam mit dem oberen und dem unteren Halter 6, 7 relativ zum Rahmenlängsträger entgegen der Fahrtrichtung nach hinten verschoben worden.

Die hintere, zweite Konsole 5 befindet sich nach wie vor an der ursprünglichen Position. Die erste Konsole 4 hingegen ist gegenüber der zweiten Konsole 5 nach hinten versetzt, so dass der Abstand zwischen der ersten und der zweiten Konsole 4, 5 verringert worden ist. Die Verschiebung der ersten Konsole 4 bzw. der Anbauplatte 1 mit deren Haltern 6, 7 nach hinten erfolgte um den konstruktiv vorgesehenen Deformationsweg "A". Die ursprünglich im unteren Bereich des Rahmenlängsträgers 2 vorgesehene Befestigungsschraube 10 wurde aufgrund der unfallbedingten Krafteinleitung und der hierdurch bewirkten Verschiebung der ersten Konsole 4 abgeschert. Die Befestigungsschraube 10 stellt somit eine Sollbruchstelle dar, die im Crashfall nachgibt, um eine Bewegung der ersten Konsole 4 relativ zum Rahmenlängsträger 2 und der zweiten Konsole 5 zu ermöglichen.

Auch im Bereich der Schrauben 9, mit denen der untere Halter 6 der Anbauplatte 1 an der zweiten Konsole 5 befestigt ist, hat eine Verschiebung der Halter 6 entlang der Längsachse der Langlöcher 8 um den Deformationsweg "A" stattgefunden. Eine entsprechende Bewegung der unteren Halter 6 wurde hierbei dadurch bewirkt, dass der untere Halter 6 der Anbauplatte 1 aufgrund der unfallbedingt in die Anbauplatte 1 eingeleiteten Kräfte gemeinsam mit der Anbauplatte 1 entlang der Schrauben 9 in den Langlöchern 8 entgegen der ursprünglichen Fahrtrichtung nach hinten verschoben worden ist.

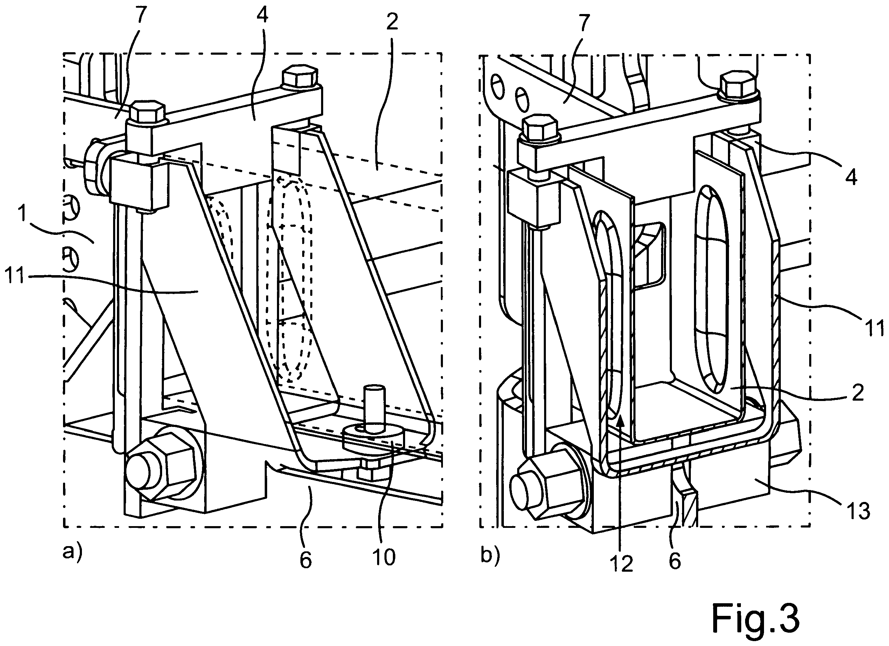

Fig. 3 zeigt die erste Konsole einer erfindungsgemäß ausgeführten Anbindung eines Anbauelementes 1, insbesondere einer Anbauplatte, im Frontendbereich eines Nutzfahrzeugs. Die erste Konsole 4 verfügt hierbei über einen weitgehend U-förmigen Grundkörper 11, der den Rahmenlängsträger 2 beidseitig umgreift und während einer Relativbewegung zwischen der ersten Konsole 4 und dem Rahmenlängsträger 2 eine gewisse Führung gewährleistet. Zwischen dem U-förmigen Grundkörper 11 und dem Rahmenlängsträger 2 ist ein Spalt in Form eines sogenannten Freigangs 12 vorgesehen, der eine Deformation bzw. eine Bewegung zwischen Rahmenlängsträger 2 und erster Konsole 4 begünstigt. Wie Fig. 3a deutlich zu entnehmen ist, ist sowohl der obere Halter 7 der Anbauplatte 1 als auch der untere Halter 6 ausschließlich mit der ersten Konsole 4 verbunden. Auf eine starre Schraubverbindung zwischen der Anbauplatte 1 und dem Rahmenlängsträger 2 wurde somit im Bereich der ersten Konsole verzichtet.

Ergänzend ist Fig. 3b deutlich zu entnehmen, dass der untere Halter 6 der Anbauplatte 1 zwischen zwei Spannbacken 13 der ersten Konsole 4 lediglich eingespannt ist. Zwischen dem Rahmenlängsträger 2 und dem diesen umgreifenden U-förmigen Grundkörper 11 ist wiederum der Freigang 12, der eine Deformation bzw. Bewegung der ersten Konsole 4 relativ zum Rahmenlängsträger 2 auf bevorzugte Weise ermöglicht, dargestellt.

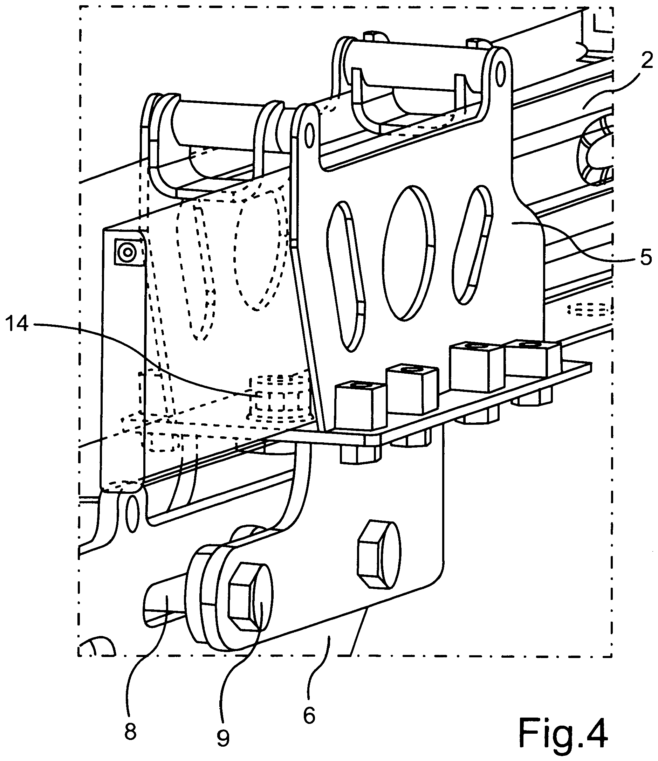

In Fig. 4 ist die zweite Konsole 5 des zweiteilig ausgeführten Tragelements 3, das eine besonders geeignete Verbindung der Anbauplatte 1 mit den Rahmenlängsträgern 2 ermöglicht, gezeigt. Die zweite Konsole 5 ist fix über ein Befestigungselement 14 mit dem Rahmenlängsträger 2 verspannt. Die Anbindung des unteren Halters 6 der Anbauplatte 1 erfolgt mit Hilfe von Schrauben 9, die eine Lasche der zweiten Konsole 5 sowie ein Langloch 8 im Halter der Anbauplatte durchdringen. Während die Schrauben 9 somit weitgehend ortsfest angeordnet sind, kann sich der untere Halter 6 der Anbauplatte 1 nach einem Frontalaufprall entlang der Schrauben 9 nach hinten bewegen. Bei einem Aufprall auf die Anbauplatte 1 wird die Anbauplatte 1 gemeinsam mit deren Halter 6, 7 relativ zum Rahmenlängsträger 2 nach hinten verschoben, so dass sich der untere Halter 6 der Anbauplatte ebenfalls relativ zu den in den Langlöchern 8 befindlichen Schrauben 9 nach hinten bewegt. Im Crashfall bleibt die fix mit dem Rahmenlängsträger 2 verspannte zweite Konsole 5 mit den Befestigungsschrauben 9 somit im Wesentlichen in ihrer Ausgangsposition, während sich die erste Konsole 4 relativ zu dieser bewegt.

Mit der erfindungsgemäßen technischen Lösung wird auf vorteilhafte Weise eine Anbindung für ein Anbauelement 1, insbesondere eine Anbauplatte, an einem Rahmenlängsträger 2 in dessen Frontendbereich zur Verfügung gestellt, die einerseits eine zuverlässige Befestigung eines Anbauelements 1 ermöglicht und andererseits eine Deformation bzw. eine Relativbewegung zwischen dem Anbauelement 1 und den Rahmenlängsträgern 2 zulässt. Auf diese Weise wird im Crashfall sichergestellt, dass die aufgrund eines Frontalaufpralls im Bereich des Anbauelementes 1 eingeleiteten Kräfte durch die Deformation bzw. die Relativbewegung zwischen Anbauplatte 1 sowie erster Konsole 4 gegenüber der zweiter Konsole 5 weitgehend aufgenommen werden können und eine Krafteinleitung in den Fahrzeuginnenraum und damit verbundene Intrusion zumindest in einem ausreichenden Maß vermieden wird.

## Patentansprüche

1. Anbindung eines Anbauelements (1) an einem zwei Rahmenlängsträger (2) aufweisenden Nutzfahrzeugrahmen in Fahrtrichtung vor dessen Frontende, wobei jeder Rahmenlängsträger (2) im vorderen Bereich ein Tragelement (3) aufweist, über das das Anbauelement (1) an den Rahmenlängsträgern (2) angebunden ist und das eine an wenigstens einer Stelle (14) fest mit dem betreffenden Rahmenlängsträger (2) des Nutzfahrzeugrahmens verbundene und verspannte Konsole aufweist, wobei bei einem Frontalaufprall im Bereich des Anbauelements (1) das Anbauelement (1) und/oder ein mit dem Anbauelement verbundener Halter (6, 7) relativ gegenüber der Konsole bewegbar ist,
**dadurch gekennzeichnet,**
**dass** die an wenigstens einer Stelle (14) fest mit dem betreffenden Rahmenlängsträger (2) des Nutzfahrzeugrahmens verbundene und verspannte Konsole eine zweite Konsole (5) ist und dass das Tragelement (3) in Fahrtrichtung vor der zweiten Konsole (5) eine erste Konsole (4) aufweist, welche mit einem Befestigungsmittel (10) am Rahmenlängsträger (2) befestigt ist, dessen Verbindung mit dem Rahmenlängsträger (2) bei einem Frontalaufprall im Bereich des Anbauelements (1) gelöst wird, wobei die ersten Konsolen (4) und die zweiten Konsolen (5) jeweils derart an den Rahmenlängsträgern (2) befestigt sind, dass bei einem Frontalaufprall im Bereich des Anbauelements (1) die erste Konsole (4) relativ zur zweiten Konsole (5) bewegbar ist.

2. Anbindung nach Anspruch 1, **dadurch gekennzeichnet, dass** zwischen der ersten Konsole (4) und wenigstens einem Rahmenlängsträger (2), an dem die Konsole (4) befestigt ist, zumindest bereichsweise ein Luftspalt als Freigang (12) vorhanden ist.

3. Anbindung nach Anspruch 1 oder Anspruch 2, **dadurch gekennzeichnet, dass** die erste Konsole (4) einen Grundkörper (11) aufweist, der den Rahmenlängsträger (2), an dem die Konsole (4) befestigt ist, zumindest an zwei Seiten wenigstens abschnittsweise überdeckt.

4. Anbindung nach einem der Ansprüche 1 bis 3, **dadurch gekennzeichnet, dass** die erste Konsole (4) und/oder die zweite (5) Konsole derart geformt sind, dass bei einem Frontalaufprall im Bereich des Anbauelements (1) ein vor der zweiten Konsole (5) befindlicher Abschnitt wenigstens eines der Rahmenlängsträger (2) zumindest teilweise verformbar ist.

5. Anbindung nach einem der Ansprüche 1 bis 4, **dadurch gekennzeichnet, dass** ein Halter (6) der Anbauplatte (1) wenigstens eine Befestigungsstruktur (8) aufweist, an der die zweite Konsole (5) mittels wenigstens einer Schraube (9) befestigbar ist und dass bei einem Frontalaufprall im Bereich des Anbauelements (1) der Halter (6) entlang der Schraube (9) verschiebbar ist.

6. Anbindung nach einem der Ansprüche 1 bis 5, **dadurch gekennzeichnet, dass** das Anbauelement (1) als Anbauplatte für eine zumindest zeitweise Befestigung von Arbeitsgeräten ausgeführt ist.

## Claims

1. The attachment of an extension element (1) to the front end, as seen in the direction of travel, of a commercial vehicle chassis having two chassis side members (2), wherein each chassis side member (2) has a support element (3) in its front area, via which the extension element (1) is attached to the chassis side members (2) and which has a bracket that is firmly connected and braced with the respective chassis side member (2) of the commercial vehicle chassis in at least one location (14), wherein, in case of a frontal impact in the area of the extension element (1), the extension element (1) and/or a mount (6, 7) connected to the extension element is displaceable relative to the bracket,
**characterized in that**
the bracket that is firmly connected and braced with the respective chassis side member (2) of the commercial vehicle chassis in at least one location (14) is a second bracket (5) and that the support element (3) has a first bracket (4) positioned in front of the second bracket (5) as seen in the direction of travel, which first bracket (4) is mounted to the chassis side member (2) with a fastening element (10) and whose connection to the chassis side member (2) is released in case of a frontal impact in the area of the extension element (1), wherein the first brackets (4) and the second brackets (5) respectively are mounted to the chassis side members (2) in such a way that the first bracket (4) is displaceable relative to the second bracket (5) in case of a frontal impact in the area of the extension element (1).

2. The attachment according to Claim 1, **characterized in that** an air gap forms a clearance (12) at least in sections between the first bracket (4) and at least one chassis side member (2) onto which said bracket (4) is mounted.

3. The attachment according to Claim 1 or Claim 2, **characterized in that** the first bracket (4) has a base body (11) which at least in sections and on at least two sides overlaps the chassis side member (2) onto which the bracket (4) is mounted.

4. The attachment according to any one of Claims 1 to 3, **characterized in that** the first bracket (4) and/or the second bracket (5) are shaped such that, in case of a frontal impact in the area of the extension element (1), a section of at least one of the chassis side members (2) positioned in front of the second bracket (5) is at least partially deformable.

5. The attachment according to any one of Claims 1 to 4, **characterized in that** a mount (6) of the extension panel (1) has at least one fastening structure (8) onto which the second bracket (5) can be mounted via at least one bolt (9) and the mount (6) is able to slide along the bolt (9) in case of a frontal impact in the area of the extension element (1).

6. The attachment according to any one of Claims 1 to 5, **characterized in that** the extension element (1) is designed as an extension panel for at least temporarily mounting work equipment.

## Revendications

1. Raccordement d'un élément rapporté (1) à un cadre de véhicule utilitaire comportant deux longerons de cadre (2) dans le sens de la marche avant l'extrémité avant de celui-ci, sachant que chaque longeron de cadre (2) comporte un élément porteur (3) dans la zone avant par le biais duquel l'élément rapporté (1) est rattaché aux longerons de cadre (2) et qui comporte une console reliée et serrée à au moins un endroit (14) fermement au longeron de cadre (2) concerné du cadre de véhicule automobile, sachant que lors d'une collision frontale dans la zone de l'élément rapporté (1), l'élément rapporté (1) et/ou un support (6, 7) relié à l'élément rapporté peut être relativement déplacé par rapport à la console,
**caractérisé en ce que**
la console reliée et serrée fermement à au moins un endroit (14) au longeron de cadre (2) concerné du cadre de véhicule utilitaire, est une deuxième console (5) et **en ce que** l'élément porteur (3) comporte dans le sens de la marche, avant la deuxième console (5), une première console (4), laquelle est fixée avec un moyen de fixation (10) sur le longeron de cadre (2) dont le raccordement au longeron de cadre (2) est détaché lors d'une collision frontale dans la zone de l'élément rapporté (1), sachant que les premières consoles (4) et les deuxièmes consoles (5) sont respectivement fixées de telle manière aux longerons de cadre (2) que lors d'une collision frontale dans la zone de l'élément rapporté (1), la première console (4) peut être déplacée par rapport à la deuxième console (5).

2. Raccordement selon la revendication 1, **caractérisé en ce qu'**un interstice d'air est présent au moins par endroits en tant que passage libre (12) entre la première console (4) et au moins un longeron de cadre (2) sur lequel la console (4) est fixée.

3. Raccordement selon la revendication 1 ou la revendication 2, **caractérisé en ce que** la première console (4) comporte un corps de base (11), qui recouvre au moins par endroits sur deux côtés le longeron de cadre (2) sur lequel la console (4) est fixée.

4. Raccordement selon l'une quelconque des revendications 1 à 3, **caractérisé en ce que** la première console (4) et/ou la deuxième console (5) sont formées de telle manière que lors d'une collision frontale dans la zone de l'élément rapporté (1) une section d'au moins un des longerons de cadre (2) se trouvant avant la deuxième console (5) peut être déformée au moins en partie.

5. Raccordement selon l'une quelconque des revendications 1 à 4, **caractérisé en ce qu'**un support (6) de la plaque de montage (1) comporte au moins une structure de fixation (8) sur laquelle la deuxième console (5) peut être fixée au moyen d'au moins une vis (9) et **en ce que** lors d'une collision frontale dans la zone de l'élément rapporté (1), le support (6) peut être déplacé le long de la vis (9).

6. Raccordement selon l'une quelconque des revendications 1 à 5, **caractérisé en ce que** l'élément rapporté (1) est exécuté comme une plaque de montage pour une fixation au moins temporaire d'appareils de travail.
